(19) **Europäisches Patentamt / European Patent Office / Office européen des brevets**

(11) **EP 4 703 340 A1**

(12) **EUROPEAN PATENT APPLICATION**
published in accordance with Art. 153(4) EPC

(43) Date of publication:
04.03.2026  Bulletin 2026/10

(21) Application number: 24797111.2

(22) Date of filing: 25.04.2024

(51) International Patent Classification (IPC):
$C05G\ 5/30^{(2020.01)}$     $B01J\ 2/00^{(2006.01)}$
$C05G\ 5/10^{(2020.01)}$

(52) Cooperative Patent Classification (CPC):
B01J 2/00; C05G 5/10; C05G 5/30

(86) International application number:
PCT/JP2024/016199

(87) International publication number:
WO 2024/225366 (31.10.2024 Gazette 2024/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority:  28.04.2023  JP 2023075207

(71) Applicant: JCAM AGRI. CO., LTD.
Tokyo 101-0041 (JP)

(72) Inventors:
• OKIZAKI Kohei
  Fuji-shi, Shizuoka 416-8501 (JP)
• SUZUKI Daichi
  Fuji-shi, Shizuoka 416-8501 (JP)
• MACHIDA Eiki
  Fuji-shi, Shizuoka 416-8501 (JP)
• AOSAKI Yoshimune
  Tokyo 101-0041 (JP)

(74) Representative: Dehns
10 Old Bailey
London EC4M 7NG (GB)

(54) **COATED GRANULAR FERTILIZER**

(57) One embodiment of the present invention is a coated granular fertilizer including a granular fertilizer and a coating that covers a surface of the granular fertilizer, in which the coating contains a biodegradable resin (A) and at least one wax (B) selected from the group consisting of a natural wax (b1) having an ester group and a modified product thereof (b2), and the wax (B) is contained in an amount of less than 80 mass% in 100 mass% of the coating.

EP 4 703 340 A1

## Description

Technical Field

One embodiment of the present invention relates to a coated granular fertilizer.

Background Art

A coated granular fertilizer in which a surface of a granular fertilizer is coated with a coating material such as a synthetic resin is known. Since release of fertilizer components is easily controlled in the coated granular fertilizer, effects such as achievement of labor saving of agricultural works and reduction in environmental burden caused by the fertilizer components have been recognized. Cultivation techniques using such coated granular fertilizers have been spreading in recent years.

However, many conventional coated granular fertilizers are coated with, for example, poorly decomposable resins, and there is a problem that the poorly decomposable resins contained in the coating after release of the fertilizer components remain in the environment.

In order to address such a problem, for example, Patent Literature 1 discloses a coated granular fertilizer having a coating layer containing 5 wt% or more and 80 wt% or less of an aliphatic polyester and 20 wt% or more and 95 wt% or less of a polyolefin wax as a coated fertilizer in which decomposition of a coating material occurs in the environment after completion of release of the fertilizer components.

Patent Literature 2 discloses a coated fertilizer including fertilizer granules and a coating disposed on a surface of the fertilizer granules, in which the coating contains poly(lactic acid); a second polymer including poly(butylene succinate), cellulose triacetate, or a combination containing at least one of the foregoing; and a sealant.

Patent Literatures 3 and 4 disclose a coated fertilizer coated with polyhydroxyalkanoate or polybutylene succinate, which is a biodegradable resin.

Citation List

Patent Literature

Patent Literature 1: JP H9-263476 A
Patent Literature 2: JP 2017-517471 A
Patent Literature 3: US 2021/0,387,925 A
Patent Literature 4: JP H07-315976 A

Summary of Invention

Technical Problem

However, in the technique of Patent Literature 1, although the coating layer has biodegradability, since the polyolefin wax contained in the coating layer is a stable substance in the natural environment, it took a long period of time for the coating layer to be decomposed in the natural environment after completion of release of the fertilizer components. Therefore, a new problem has arisen in that fragments of the coating layer remain. There is a possibility that the coating layer remains in a fragmented state in the ocean for a long period of time, and there is room for improvement.

In the technique of Patent Literature 2, the biodegradability of the coating is not satisfactory. Furthermore, a polyolefin-based wax such as polyethylene wax was used as a sealant, which is an essential component. These components required a long period of time to be decomposed in the natural environment, and there was a problem in that these components remained in fields.

In the technique of Patent Literature 3, although it has disintegrability that allows it to be easily decomposed in the natural environment, the permeability of moisture into the inside of the fertilizer is too high, and therefore, the fertilizer components are released for a long period of time, which is not satisfactory in terms of release controllability.

In the technique of Patent Literature 4, because biodegradable plastics have high water vapor permeability, the release rate of the fertilizer components is high, and release suppression of fertilizer components is insufficient.

That is, the coated granular fertilizers of the related art could not achieve both excellent biodegradability in the environment and release controllability of the fertilizer components.

For this reason, one embodiment of the present invention provides a coated granular fertilizer that has excellent biodegradability and also has excellent release controllability of fertilizer components.

Solution to Problem

The present inventors have intensively studied to solve the above problems. As a result, the present invention has been completed.
Examples of the configuration of the present invention include the following [1] to [7].

[1] A coated granular fertilizer including: a granular fertilizer; and a coating that covers a surface of the granular fertilizer,

in which the coating contains a biodegradable resin (A) and at least one wax (B) selected from the group consisting of a natural wax (b1) having an ester group and a modified product thereof (b2), and
the wax (B) is contained in an amount of less than 80 mass% in 100 mass% of the coating.

[2] The coated granular fertilizer according to [1], in which the wax (B) is at least one selected from the group consisting of rice wax, castor wax, montan wax, beeswax, carnauba wax, candelilla wax, palm wax, soybean oil wax, and sunflower oil wax.
[3] The coated granular fertilizer according to [1] or [2], in which the wax (B) satisfies the following requirement (I):

(I) an acid value is 0.5 to 130 in a method for measuring the acid value as defined in JIS K 0070.

[4] The coated granular fertilizer according to any one of [1] to [3], in which the biodegradable resin (A) is at least one selected from the group consisting of polybutylene succinate, polylactic acid, polybutylene adipate terephthalate, polyhydroxyalkanoate, cellulose acetate, and polycaprolactone.
[5] The coated granular fertilizer according to any one of [1] to [4], in which the biodegradable resin (A) satisfies the following requirement (II):
(II) a melt flow rate (MFR) measured in accordance with ISO 1133 at 190°C under a load of 2.16 kg is in a range of 0.1 to 30 g/10 min.
[6] The coated granular fertilizer according to any one of [1] to [5], in which a mass ratio (A/B) of the biodegradable resin (A) to the wax (B) in 100 mass% of the coating is 8/2 to 5/5.
[7] The coated granular fertilizer according to any one of [1] to [6], in which a ratio of the coating with respect to 100 mass% of the coated granular fertilizer is 3 to 20 mass%.

Advantageous Effects of Invention

According to one embodiment of the present invention, it is possible to provide a coated granular fertilizer that has excellent biodegradability and also has excellent release controllability of fertilizer components.

Brief Description of Drawings

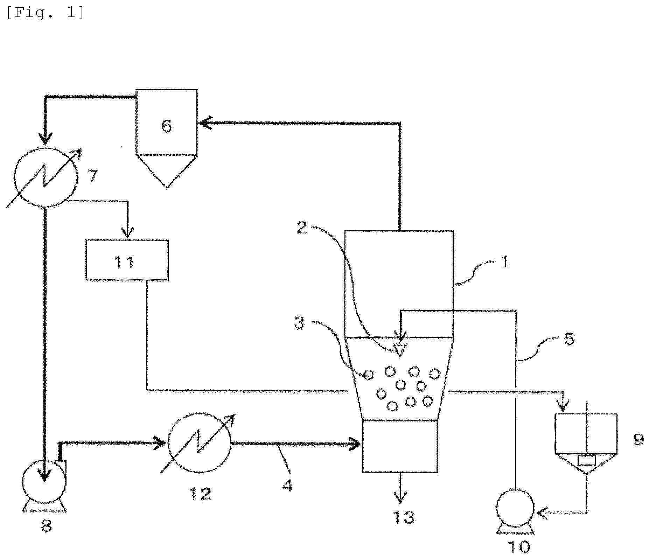

Fig. 1 is an example of an apparatus for producing a coated granular fertilizer.

Description of Embodiments

One embodiment of the present invention relates to a coated granular fertilizer.
The present application claims priority based on Japanese Patent Application No. 2023-075207 filed in Japan on April 28, 2023, the contents of which are incorporated herein by reference.
Next, the present invention will be specifically described.

<Coated Granular Fertilizer>

A coated granular fertilizer according to one embodiment of the present invention includes a granular fertilizer and a coating that covers a surface of the granular fertilizer, in which the coating contains a biodegradable resin (A) and at least one wax (B) selected from the group consisting of a natural wax (b1) having an ester group and a modified product thereof (b2), and the wax (B) is contained in an amount of less than 80 mass% in 100 mass% of the coating.

<Biodegradable Resin (A)>

The coated granular fertilizer according to one embodiment of the present invention contains a biodegradable resin (A). Hereinafter, the biodegradable resin (A) is also simply referred to as "component (A)".

[Biodegradability]

The biodegradable resin generally refers to a resin that is completely consumed by microorganisms and produces only natural by-products. In the present invention, the component (A) may be a resin confirmed to have the degree of biodegradation measured in accordance with a test method such as JIS or ISO, or a resin certified by a public agency.

Examples of the method for measuring biodegradability by a test method of JIS or ISO include JIS K 6950 (ISO 14851), JIS K 6953-1 (ISO 14855-1), JIS K 6955 (ISO 17556), JIS K 6951 (ISO 14852), and JIS K6953-2 (ISO 14855).

Examples of certification by a public agency include the following.

In Japan, the Japan BioPlastics Association (also referred to as JBPA) has established a biodegradable plastic identification system, and materials recognized as biodegradable in the above tests are registered on the positive list of biodegradable plastics.

Outside Japan, TUV AUSTRIA in Belgium (also referred to as TUV) has established a biodegradability certification system, and materials that are recognized as biodegradable in the above tests can obtain certification.

In the present invention, the component (A) is preferably certified for biodegradability by JBPA or TUV.

[Melt Flow Rate (MFR)]

The biodegradable resin (A) preferably has a melt flow rate (MFR) in a range of 0.1 to 30 g/10 min, more preferably 0.1 to 20 g/10 min, and still more preferably 2 to 10 g/10 min, as measured in accordance with ISO 1133 at 190°C under a load of 2.16 kg.

When the MFR of the biodegradable resin (A) is within the above range, film formation is excellent, defects of the coating are reduced, and release controllability of the fertilizer components tends to be excellent, which is preferable.

Examples of the biodegradable resin (A) include an aromatic polyester-based resin, an aliphatic polyester resin, an aliphatic aromatic polyester resin, polysaccharides, and a polymer containing starch.

Specific examples of the aromatic polyester-based resin include polyethylene terephthalate, polyethylene-2,6-naphthalate, polypropylene terephthalate, and polybutylene terephthalate.

Specific examples of the aliphatic polyester resin include polylactic acid-based resins such as polylactic acid (also referred to as PLA) and a polylactic acid/polyether copolymer, polyhydroxyalkanoic acids such as polyglycolic acid, polyhydroxybutyrate, poly(3-hydroxybutyrate), poly(3-hydroxybutyrate·3-hydroxyhexanoate), and poly(3-hydroxybutyrate·3-hydroxyvalerate), polycaprolactone, polybutylene succinate (also referred to as PBS), and polybutylene succinate adipate (also referred to as PBAT).

Specific examples of the aliphatic aromatic polyester resin include polyethylene succinate terephthalate and polybutylene adipate terephthalate.

The aliphatic polyester resins and the aromatic polyester resins may be used alone or may be in the form of a copolymer of two or more types.

Specific examples of the polymer containing polysaccharides and starch include a cellulose-based resin such as cellulose acetate, a glucosamine-based resin such as chitosan, and a starch polyester.

Among them, the biodegradable resin (A) is preferably at least one selected from the group consisting of polybutylene succinate, polylactic acid, polybutylene adipate terephthalate, polyhydroxyalkanoate, cellulose acetate, and polycaprolactone, more preferably at least one selected from the group consisting of polybutylene succinate, polylactic acid, polybutylene adipate terephthalate, and polycaprolactone, because the initial release amount of fertilizer components is small and the release controllability is excellent, and still more preferably polybutylene succinate, because the water permeability into the coating is moderate, the release controllability of the fertilizer components is particularly excellent, the biodegradability of the coating in the environment is particularly excellent, and strength of the coating for storage can be imparted.

The biodegradable resins (A) may be used alone or in combination with two or more thereof.

When the biodegradable resins (A) are used in combination, it is preferable to combine polybutylene succinate and polybutylene adipate terephthalate, polybutylene succinate and polylactic acid, polybutylene succinate and polycaprolactone, polybutylene adipate terephthalate and polylactic acid, or polybutylene adipate terephthalate and polycaprolactone.

Among them, from the viewpoint of excellent film forming properties, polybutylene succinate and polybutylene adipate terephthalate, or polybutylene succinate and polylactic acid are more preferably combined.

In a case where any two types of resins (referred to as a1 and a2) are used in combination as the biodegradable resin (A), when the biodegradable resin (A) is 100 mass%, a mass ratio (a1/a2) of the biodegradable resin (a1) to the biodegradable resin (a2) is preferably 100/1 to 1/100.

In a case where polybutylene succinate and polybutylene adipate terephthalate are used as the biodegradable resin (A), when the biodegradable resin (A) is 100 mass%, a mass ratio (a1/a2) of the polybutylene succinate (a1) to the polybutylene adipate terephthalate (a2) is preferably 100/1 to 50/50.

In a case where polybutylene succinate and polylactic acid are used as the biodegradable resin (A), when the biodegradable resin (A) is 100 mass%, a mass ratio (a1/a2) of the polybutylene succinate (a1) to the polylactic acid (a2) is preferably 100/1 to 50/50.

As the biodegradable resin (A), a commercially available product can also be used.

Examples of the polybutylene succinate include BioPBS manufactured by Mitsubishi Chemical Corporation. Examples of the polybutylene adipate terephthalate include ECOFLEX and ECOVIO available from BASF SE. Examples of the polylactic acid include 4060D available from NatureWorks LLC.

These commercially available products may be used alone, or may be used in combination with two or more thereof.

<At Least One Wax (B) Selected from Group Consisting of Natural Wax (b1) Having Ester Group and Modified Product Thereof (b2)>

A coated granular fertilizer according to one embodiment of the present invention contains at least one wax (B) selected from the group consisting of a natural wax (b1) having an ester group and a modified product thereof (b2), and the wax (B) is contained in an amount of less than 80 mass% in 100 mass% of the coating.

Hereinafter, at least one wax (B) selected from the group consisting of a natural wax (b1) having an ester group and a modified product thereof (b2) may simply be referred to as "component (B)".

The coated granular fertilizer according to one embodiment of the present invention preferably contains the component (B) in an amount of 1 mass% or more, more preferably 10 mass% or more, still more preferably 20 mass% or more, and most preferably 30 mass% or more in 100 mass% of the coating. When the component (B) is contained in an amount of 1 mass% or more, the release controllability of the fertilizer components tends to be excellent.

The coated granular fertilizer according to one embodiment of the present invention preferably contains the component (B) in an amount of less than 80 mass%, preferably 50 mass% or less, and more preferably 40 mass% or less in 100 mass% of the coating.

When the component (B) is contained in an amount of less than 80 mass%, the release controllability of the fertilizer components is excellent. When the content of the wax is too high, the film forming state deteriorates, such that it is not possible to obtain the release controllability of the fertilizer components in the coated granular fertilizer for a longer period of time.

In the component (B), having an ester group means that at least one wax selected from the group consisting of a natural wax (b1) and a modified product thereof (b2) has one or more ester groups.

The natural wax (b1) refers to a plant-based wax, a mineral-based wax, and an animal-based wax.

Examples of the plant-based wax include rice wax, sunflower oil wax, jojoba wax, soybean oil wax, corn oil wax, carnauba wax, candelilla wax, palm wax, coconut wax, candelilla wax, and carnauba wax.

Examples of the mineral-based wax include montan wax.

Examples of the animal-based wax include beeswax and spermaceti.

From the viewpoint of carbon neutrality, the natural wax (b1) is preferably a plant-based wax or an animal-based wax, and more preferably at least one selected from the group consisting of rice wax, beeswax, carnauba wax, candelilla wax, palm wax, soybean oil wax, sunflower oil wax, and spermaceti.

The modified product (b2) refers to a modified product of the natural wax (b1).

Examples of the modified product (b2) include a hydrogenated product (also referred to as a hardened product), an oxidized product, a saponified product, an esterified product, and an amidated product, of all or part of a natural wax, and the hydrogenated product is preferable.

Specific examples of the modified product (b2) include castor wax (also referred to as hydrogenated castor oil), semi-hydrogenated castor oil wax, hydrogenated rice wax, hydrogenated palm oil wax, hydrogenated soybean oil wax, and partially saponified ester wax of montanic acid, and hydrogenated waxes are generally preferable because they raise the melting point and improve film forming properties during coating. In addition, castor wax is preferable due to its low cost and wide availability, as it is widely used and distributed in cosmetics.

The component (B) is preferably at least one selected from the group consisting of rice wax, castor wax, montan wax, beeswax, carnauba wax, candelilla wax, palm wax, soybean oil wax, and sunflower oil wax because it leads to a reduction in coating defects, provides an excellent coating, and provides excellent release controllability of the fertilizer components, is more preferably at least one selected from the group consisting of montan wax, rice wax, and castor wax because it is widely used and has stable quality, is still more preferably at least one selected from the group consisting of rice wax and castor wax because it can obtain a high release suppressing effect, and is most preferably rice wax because it has an excellent balance between a hydrophilic component and a hydrophobic component constituting rice wax and has moderate moisture permeability.

[Acid Value]

The acid value refers to the amount of free fatty acids in fats and oils, and the acid value is expressed as the number of mg of potassium hydroxide required to neutralize free fatty acids contained in 1 g of the fats and oils.

In the present invention, the component (B) has an acid value of preferably 0.5 to 130, more preferably 3 to 55, and still more preferably 5 to 25 in a method for measuring an acid value as defined in JIS K 0070.

The present inventors have found that when the acid value of the component (B) is lower than 0.5, the hydrophilicity of the coating tends to decrease and the release controllability of the fertilizer components tends to improve; however, the biodegradability of the coating in the environment tends to be lower. In addition, when the acid value is higher than 130, the hydrophilicity of the coating increases, and the fertilizer components tend to be completely released in a short period of time.

Then, the present inventors have studied the compatibility between excellent biodegradability in the environment and release controllability of the fertilizer components, and have found that, in the component (B), biodegradability and release controllability are particularly preferable when the acid value is within a specific range.

From the viewpoint of a low acid value and improved release controllability of the fertilizer components, the component (B) is preferably at least one selected from the group consisting of rice wax, castor wax, carnauba wax, candelilla wax, and montan wax, and more preferably rice wax.

[Saponification Value]

The saponification value indicates the amount of free fatty acids and esters in fats and oils, and the saponification value is expressed as the number of mg of potassium hydroxide required to saponify the esters and neutralize the free fatty acids contained in 1 g of the fats and oils.

In one embodiment of the present invention, the component (B) has a saponification value of preferably 1 to 190, more preferably 1 to 170, still more preferably 50 to 160 in a method for measuring a saponification value as defined in JIS K 0070, and most preferably 50 to 120 from the viewpoint of particularly excellent release controllability.

Rice waxes having different acid values are commercially available depending on a difference in a method for separating and purifying wax components from rice bran. Examples of the acid value of the rice wax include 7 to 9, 15 to 25, 45 to 55, and 125 to 135. Among them, the acid value of the rice wax is preferably 7 to 9, 15 to 25, or 45 to 55 from the viewpoint of particularly excellent release controllability, and is more preferably 7 to 9 or 15 to 25 from the viewpoint of further improved release controllability due to a small amount of highly hydrophilic components, which are considered to affect water vapor permeability.

In the component (B), the acid value of the rice wax is preferably within a range of 0.5 to 130, more preferably within a range of 0.5 to 55, and still more preferably within a range of 5 to 25 from the viewpoint of particularly excellent release controllability of the fertilizer components.

[Biodegradability]

Similarly to the biodegradable resin (A) described above, the component (B) may be any component that has been confirmed to have the degree of biodegradation as measured in accordance with JIS or ISO standards, and is preferably a component that has obtained certification, and the type of the component (B) is not particularly limited.

The components (B) may be used alone, or may be used in combination with two or more thereof.

<Granular Fertilizer>

The granular fertilizer used in one embodiment of the present invention may contain one or more fertilizer components such as nitrogen, phosphoric acid, potassium. Specifically, in addition to nitrogenous fertilizers, phosphate fertilizers, and potassium fertilizers, examples of the granular fertilizer include fertilizers containing, as needed, trace elements such as calcium, magnesium, sulfur, iron, manganese, and boron, which are essential plant elements, and silicon. In addition, a fertilizer containing, for example, a nitrification inhibitor and a pesticide component may be used. Among them, nitrogenous fertilizers containing ammonium sulfate, urea, and ammonium nitrate, which are highly water-soluble and environmentally leachable components, potassium fertilizers containing potassium sulfate and potassium chloride, compound fertilizers containing urea, ammonia nitrogen, and nitrate nitrogen are preferable, and urea, which has a low unit cost per fertilizer component, is more preferable.

The fertilizer components may be used alone, or may be used in combination with two or more thereof.

The granular fertilizer may contain other components as long as the effect of the present invention is not impaired. Examples of the other components that may be contained in the granular fertilizer include a carrier, a binder, a surfactant, waste molasses, animal oil, vegetable oil, hydrogenated oil, a fatty acid, fatty acid metal salt, paraffin, wax, and glycerin, and the other components may be used alone, or may be used in combination with two or more thereof.

A method for producing a granular fertilizer used in one embodiment of the present invention is not particularly limited, and the granular fertilizer can be produced using a known granulation method. The granular fertilizer can be produced using, for example, a fluidized bed granulation method, a tumbling granulation method, a coating granulation method, or an adsorption granulation method.

The shape of the granular fertilizer used in one embodiment of the present invention is not particularly limited, but is preferably spherical from the viewpoint of easily uniformly coating the surface with the coating material.

Specifically, the shape of the granular fertilizer is preferably 0.7 or more and 1 or less, more preferably 0.75 or more and 1 or less, and most preferably 0.8 or more and 1 or less in terms of a circularity coefficient calculated by the following Formula (2). The maximum value of the circularity coefficient is 1, and as the value approaches 1, the particles of the granular fertilizer approach a perfect circle, and the circularity coefficient decreases as the shape of the particle collapses from the perfect circle.

$$\text{Circularity coefficient} = \{(4\pi \times \text{Projected area of particle})/(\text{Perimeter of particle projection diagram})^2\} \qquad \text{Formula (2)}$$

In one embodiment of the present invention, the granular fertilizer preferably has an average particle diameter of 1 to 10 mm and more preferably 2 to 5 mm. When the average particle diameter of the granular fertilizer is within the above range, the surface of the granular fertilizer is easily coated to produce a coated granular fertilizer, which is preferable.

As the granular fertilizer, a commercially available granular fertilizer or a produced granular fertilizer can be used, and the average particle diameter can be adjusted to a desired value by appropriately using, for example, a sieve.

In one embodiment of the present invention, the average particle diameter refers to an average particle diameter calculated by a particle size distribution analyzer such as a dynamic image analysis method.

In one embodiment of the present invention, as a commercially available granular fertilizer, for example, urea (manufactured by PETRONAS Fertilizer (Kedah) Sdn. Bhd.) can be used as granular urea, ammonium phosphate (manufactured by Central Green Co., Ltd.) can be used as granular ammonium phosphate, and potassium sulfate (manufactured by ASAHI AGRIA CO., LTD.) can be used as granular potassium.

<Coating>

A coated granular fertilizer according to one embodiment of the present invention includes a granular fertilizer and a coating that covers a surface of the granular fertilizer.

The coating contains a biodegradable resin (A) and at least one wax (B) selected from the group consisting of a natural wax (b1) having an ester group and a modified product thereof (b2), and the wax (B) is contained in an amount of less than 80 mass% in 100 mass% of the coating.

The coating preferably contains polybutylene succinate as the biodegradable resin (A) and rice wax as the component (B). Although the reason for the preference is not clear, the present inventors speculate that it is preferable that the coating contains polybutylene succinate as the biodegradable resin (A) and rice wax as the component (B) since the balance between the alkyl chain length and the ester of rice wax provides a significantly high affinity for polybutylene succinate, resulting in an improved film state when the film is formed, increased coating strength, and improved release controllability.

In the coated granular fertilizer according to one embodiment of the present invention, a mass ratio (A/B) of the biodegradable resin (A) to at least one wax (B) selected from the group consisting of a natural wax (b1) having an ester group and a modified product thereof (b2) in 100 mass% of the coating is preferably 8/2 to 5/5, more preferably 7.5/2.5 to 5/5, and still more preferably 7/3 to 5/5 from the viewpoint of an excellent balance between coating strength and release controllability.

The coated granular fertilizer according to one embodiment of the present invention preferably contains the component (A) in an amount of 15 to 85 mass%, and more preferably 50 to 80 mass%, in 100 mass% of the coating, from the viewpoint of excellent film forming properties. When the component (A) is within the above range, excellent film formation tends to be achieved. In addition, when the component (A) exceeds 85 mass%, the initial release amount of the fertilizer components tends to be small, but the release controllability of the fertilizer components over a long period of time tends to deteriorate.

It is considered that when the mass of the component (B) in the coating is less than 15 mass%, the effect of suppressing fertilizer release by the component (B) decreases, and the release rate of the fertilizer component tends to increase.

When the component (A) is 100 mass% and the component (B) is not contained at all, the initial release amount of the fertilizer components decreases, but the release controllability for eluting the fertilizer components over a long period of time tends to deteriorate.

In the coated granular fertilizer according to one embodiment of the present invention, the component (B) is less than 80 mass% in 100 mass% of the coating. It is preferable that the component (B) is contained in an amount of 15 to 75 mass% in 100 mass% of the coating, and more preferably 20 to 50 mass%, from the viewpoint of excellent release controllability of the fertilizer components. When the content of the component (B) in 100 mass% of the coating is less than 15 mass%, the initial release amount of the fertilizer components tends to be high. In addition, when the content exceeds 85 mass%, the coating strength is insufficient, and the initial release amount of the fertilizer components tends to increase.

The coating may contain a filler as another component as long as the effect of the present invention is not impaired. Examples of the filler include plate-like fillers such as talc, mica, and hydrotalcite, inorganic substances such as calcium carbonate, silica, clay, bentonite, smectite, montmorillonite, various crushed mineral products, and sulfur, organic fillers such as starch, cellulose nanofibers, and carbon, and organic substances such as surfactants. The fillers may be used alone, or may be used in combination with two or more thereof.

Since the filler is relatively inexpensive, an inorganic filler is preferable, and since the strength of the coating is improved and deterioration of release controllability associated with addition tends to be small, a plate-like filler is more preferable, and talc is still more preferable.

A median diameter of the filler is preferably 100 μm or less and more preferably 1 to 50 μm. When the median diameter is within the above range, problems such as peeling of the coating during film formation and clogging of a spray nozzle with the coating resin composition, which are caused by an excessively large median diameter, tend to be less likely to occur. Even when the median diameter of the filler is larger than the thickness of the coating and a portion of the filler protrudes from the surface of the coating, the object is achieved as long as a portion of the filler is incorporated into the coating and adheres to the coating. For the measurement of the median diameter, for example, a known method such as the laser diffraction particle size distribution measuring apparatus can be used.

When the filler is blended, the filler is contained preferably in an amount of 0 to 80 mass% and more preferably 0 to 30 mass% in 100 mass% of the coating, depending on the type of the filler. When the content of the filler in 100 mass% of the material for forming the coating exceeds 80 mass%, the release controllability tends to remarkably deteriorate.

The coating may contain a compatibilizer as another component as long as the effect of the present invention is not impaired. Examples of the compatibilizer include unsaturated carboxylic acid-modified polyolefins such as maleic anhydride-modified polypropylene and maleic anhydride-modified polyethylene; copolymers of styrene or α-olefin and maleic anhydride or maleic acid ester; aliphatic carboxylic acid-modified product of polyolefin wax; styrene-based thermoplastic elastomers such as styrene-butadiene-styrene (SBS) and styrene-ethylene-butylene-styrene (SEBS); and rubbers such as ethylene-propylene (EPR).

The compatibilizers may be used alone, or may be used in combination with two or more thereof.

Note that, from the viewpoint of reducing biodegradability, it is preferable that the coating does not substantially contain a wax other than the component (B). It is preferable that the coating substantially does not contain aliphatic hydrocarbon-based waxes such as polyolefin waxes, for example, polyethylene wax, paraffin, and microcrystalline wax.

The phrase "the coating substantially does not contain waxes other than the component (B)" means that waxes present as impurities in each component or waxes mixed from, for example, raw materials during the production of the coated granular fertilizer according to one embodiment of the present invention may be contained in the coating, but that waxes other than the component (B) are not intentionally added to the coating.

The phrase "substantially does not contain waxes other than the component (B)" specifically means that the content of the waxes other than the component (B) in the coated granular fertilizer of the present invention is usually 0 to 1 mass%, preferably 0 to 0.5 mass%, and more preferably 0 to 0.1 mass% in 100 mass% of the coating.

In one embodiment of the present invention, a ratio of the coating with respect to 100 mass% of the coated granular fertilizer is defined as a coating ratio, and the coating ratio can be represented by the following Formula (3).

Coating ratio (%) = (Mass of coating)/(Mass of coated granular fertilizer) × 100                    Formula (3)

Note that the mass of the coating is calculated by subtracting the mass of the granular fertilizer before coating from the mass of the coated granular fertilizer. In addition, as each mass, an average value of 350 coated granular fertilizers or 350 granular fertilizers before coating can be used.

In the coated granular fertilizer of one embodiment of the present invention, the ratio of the coating with respect to 100 mass% of the coated granular fertilizer is preferably 3 to 20 mass%, more preferably 4 to 15 mass%, and still more preferably 5 to 12 mass%. When the ratio of the coating is within the above range, the release controllability of the fertilizer components is excellent, which is preferable.

[Release Controllability of Fertilizer Components]

The release controllability of the fertilizer components in the coated granular fertilizer can be evaluated, for example, by an release rate (%) of the fertilizer components when the coated granular fertilizer is immersed in water. The release rate (%) of the fertilizer components can be represented by the following Formula (4).

Release rate(%) = (Mass of released fertilizer components)/(Mass of fertilizer components contained in coated granular fertilizer) × 100 ⠀⠀⠀Formula (4)

The release rate of the fertilizer components can be measured, for example, by leaving the coated granular fertilizer in water at 25°C and quantitatively analyzing the fertilizer components released into water over time. Examples of the quantitative analysis method of the fertilizer components include the method proposed by the Environmental Research Institute of the Ministry of Agriculture, Forestry and Fisheries ("Detailed Fertilizer Analysis Method", edited by Masayoshi KOSHINO, published by Yokendo Co. Ltd., 1988).

The fertilizer components are generally water-soluble, and when the coating has defects, a large amount of fertilizer components releases simultaneously with fertilizer application, resulting in insufficient release controllability.

In the coated granular fertilizer according to one embodiment of the present invention, as for the release controllability, the release rate on day 7 in water at 25°C is preferably less than 100%, more preferably less than 98%, still more preferably less than 80%, still more preferably less than 45%, and even more preferably less than 30%, in accordance with the "Detailed Fertilizer Analysis Method" described above.

<Method for Producing Coated Granular Fertilizer>

A method for producing a coated granular fertilizer according to one embodiment of the present invention is not particularly limited. The coated granular fertilizer can be produced by coating the surface of the core material with a coating material containing the component (A), the component (B), and other components as long as the effect of the present invention is not impaired.

The coated granular fertilizer can be produced, for example, using a known technique such as a method of spraying a melt-dispersed coating material onto the surface of the core material, a method of spraying a coating material obtained by dissolving or dispersing a coating material in a solvent onto the surface of the core material (solution spraying method), a method of spraying a monomer onto the surface of the core material and reacting the monomer on the surface to form a resin (coating), and a dipping method of immersing the core material in the coating material. Among them, the solution spraying method is preferable.

When the coating material is dissolved or dispersed in the solvent, the solvent is not particularly limited as long as it can dissolve or disperse the coating material, but a solvent having a boiling point of 30°C or higher and 150°C or lower is preferable. When the boiling point is lower than 30°C, condensation and recovery become difficult, and when the boiling point is higher than 150°C, drying becomes difficult. From the viewpoint of non-flammability or flame retardancy, a halogen-based solvent or water is preferable, and examples of the halogen-based solvent include dichloromethane, chloroform, dichloroethane, trichloroethane, trichloroethylene, and perchloroethylene. It is also possible to use a mixture of the solvents. From the viewpoint of environmental influence, a solvent other than the halogen solvent is preferable, and examples thereof include toluene, xylene, acetone, methyl ethyl ketone, methyl isobutyl ketone, ethyl acetate, isopropyl acetate, butyl acetate, tetrahydrofuran, dimethoxyethane, and diethoxyethane.

The apparatus used for coating is not particularly limited, and examples of the coating method include apparatuses employing a pan coating method, a spouted bed coating method, a fluidized bed coating method, a tumbling coating method, a dry coating method, or a combination thereof. In the present invention, it is preferable to use a spouted bed coating method or a fluidized bed coating method.

Examples

Next, one embodiment of the present invention will be described in more detail with reference to Examples, but the present invention is not limited thereto. Unless otherwise specified, "%" in the following Examples means mass%.

<Preparation of Materials>

In Examples and Comparative Examples, a coated granular fertilizer was produced using commercially available products. Physical properties are as follows.

[Granular Fertilizer]

Granular urea (manufactured by PETRONAS Fertilizer (Kedah) Sdn. Bhd.), circularity coefficient 0.9

[Component (A)]

· Polybutylene succinate (also referred to as PBS-1)

BioPBS™ FZ91 manufactured by Mitsubishi Chemical Corporation, density: 1.26 g/cm$^3$ (ISO 1183), melting point: 115°C (ISO 3146), melt flow rate: (MFR: 190°C, 2.16 kg) 0.1 to 30. It is listed under Classification Number A-1 (Biodegradable Synthetic Polymer Compounds) of the JBPA Positive List for Biodegradable Plastics and is a product that has obtained biodegradability certification.

· Polybutylene adipate terephthalate (also referred to as PBAT-1)

ECOFLEX™ manufactured by BASF SE, density: 1.26 g/cm$^3$ (ISO 1183), melting point: 110 to 120°C (ISO 3146), melt flow rate: (MFR: 190°C, 2.16 kg) 2.7 to 4.9. It is listed under Classification Number A-1 (Biodegradable Synthetic Polymer Compounds) of the JBPA Positive List for Biodegradable Plastics and is a product that has obtained biodegradability certification.

· Polylactic acid (also referred to as PLA-1)

4060D manufactured by NatureWorks LLC., density: 1.24 g/cm$^3$ (ISO 1183), melting point: 160°C (ISO 3146), melt flow rate: (MFR: 190°C, 2.16 kg) 10. It is listed under Classification Number A-1 (Biodegradable Synthetic Polymer Compounds) of the JBPA Positive List for Biodegradable Plastics and is a product that has obtained biodegradability certification.

[Component (B)]

· Rice wax (also referred to as RBW-1)

Acid value (mgKOH/g): 15 to 25, saponification value (mgKOH/g): 92.5, melting point (°C): about 79. A material certified for biodegradability by TUV was used.

· Rice wax (also referred to as RBW-2)

Acid value (mgKOH/g): 130, saponification value (mgKOH/g): 170, melting point (°C): 78. A material certified for biodegradability by TUV was used.

· Castor wax (also referred to as C Wax)

Acid value (mgKOH/g): 3, saponification value (mgKOH/g): 175 to 186, melting point (°C): 86. It was confirmed that the degree of biodegradation was 60% or more within 180 days in accordance with JIS K 6955 (ISO 17556).

· Rice wax (also referred to as RBW-3)

Acid value (mgKOH/g): 45 to 55, saponification value (mgKOH/g): 115, melting point (°C): about 78. A material certified for biodegradability by TUV was used.

· Rice wax (also referred to as RBW-4)

Acid value (mgKOH/g): 8.8, saponification value (mgKOH/g): 80, melting point (°C): about 80.2. It was confirmed that the degree of biodegradation was 60% or more within 180 days in accordance with JIS K 6955 (ISO 17556).

· Montan wax (also referred to as MoW-1)

Acid value (mgKOH/g): 13 to 25, saponification value (mgKOH/g): 180, melting point (°C): 73 to 79. It was confirmed that the degree of biodegradation was 60% or more within 180 days in accordance with JIS K 6955 (ISO 17556).

· Montan wax (also referred to as MoW-2)

Acid value (mgKOH/g): 121.5, saponification value (mgKOH/g): 155, melting point (°C): 79 to 85. It was confirmed that the degree of biodegradation was 60% or more within 180 days in accordance with JIS K 6955 (ISO 17556).

· Montan wax (also referred to as MoW-3)

Acid value (mgKOH/g): 143.5, saponification value (mgKOH/g): 170, melting point (°C): 79 to 85. It was confirmed that the degree of biodegradation was 60% or more within 180 days in accordance with JIS K 6955 (ISO 17556).

· Candelilla wax (also referred to as CanW-1)

Acid value (mgKOH/g): 17.9, melting point (°C): 71.5. It was confirmed that the degree of biodegradation was 60% or more within 180 days in accordance with JIS K 6955 (ISO 17556).

· Carnauba wax (also referred to as CarW-1)

Acid value (mgKOH/g): 7.5, melting point (°C): 83.5. It was confirmed that the degree of biodegradation was 60% or more within 180 days in accordance with JIS K 6955 (ISO 17556).

[Others]

· Polyethylene wax (also referred to as PE(1000))

Weight average molecular weight (Mw): about 1,000, acid value (mgKOH/g): 0, melting point (°C): 110. It was confirmed that the material was hardly biodegradable within 180 days in accordance with JIS K 6955 (ISO 17556).

<Examples 1 to 14 and Comparative Examples 1 and 2>

(Example 1)

[Method for Producing Coated Granular Fertilizer]

The surface of the granular fertilizer (granular urea) was coated by the following method using the production apparatus illustrated in Fig. 1.
In the production apparatus of Fig. 1, hot air flowed from the lower portion to the upper portion of a fluidized bed 1 and passed through a dust collector 6, and the gas was cooled in a condenser 7 to condense and collect the solvent. The gas that passed through the condenser 7 was heated by passing through a blower 8 and a heater 12, and was circulated so as to be led to the fluidized bed 1 again as hot air.
Granular urea ("urea" manufactured by PETRONAS Fertilizer (Kedah) Sdn. Bhd., sieved to have a particle diameter of 3.0 to 4.0 mm, average particle diameter: 3.3 mm, circularity coefficient: 0.9) was used as the particles 3.
The particle diameter and the average particle diameter were measured by a dynamic image analysis method (Millitrac JPA: manufactured by Nikkiso Co., Ltd.).
400 g of granular urea was introduced through an inlet provided on the side of the fluidized bed 1, and brought into a fluidized state by hot air introduced from the lower portion of the fluidized bed 1 and stirring blades installed at the bottom of the fluidized bed 1. At this time, the hot air flow rate and the hot air temperature were adjusted so that the particle temperature was $60 \pm 2$°C. The hot air flow rate was adjusted while being measured by a flow meter installed between the blower 8 and the fluidized bed 1, and the hot air temperature was adjusted while measuring the particle temperature and the exhaust temperature (upper temperature of the fluidized bed 1).
In a dissolution tank 9 in Fig. 1, 60 mass% of polybutylene succinate (PBS-1) and 40 mass% of rice wax (RBW-1) as coating materials, and 3,200 mass% of trichloroethylene as a solvent of a coating solution were charged, and were uniformly dissolved by mixing and stirring at $80 \pm 2$°C for 90 minutes to prepare a uniform spray solution 5. In addition, the dissolution tank 9 was continuously stirred until the coating was completed.

The spray solution 5 was transported to a spray nozzle 2 installed at the upper portion of the fluidized bed 1 at a flow rate of about 35.5 ml/min, and sprayed to the fluidized granular urea. The trichloroethylene contained in the sprayed solution was condensed and collected by the condenser 7, stored in a tank 11, and led to the dissolution tank 9.

The above-described coating operation was started when the temperature of the fluidized granular urea reached 60°C, and was performed until the coating ratio reached 8.4 mass%. Thereafter, the drying was performed by blowing only hot air for 10 minutes while adjusting the temperature of the hot air, taking care to maintain the particle temperature at $60 \pm 2$°C.

When the drying was completed, the coated granular urea was discharged through an outlet 13 at the lowermost portion of the fluidized bed 1, and then degassed by a ventilation treatment for 0.5 to 1 hour to remove trichloroethylene, thereby obtaining a coated granular fertilizer.

It was confirmed that the coating of the obtained coated granular fertilizer was biodegradable in accordance with JIS K 6955 (ISO 17556).

The production conditions of the coated granular fertilizer are summarized as follows.

Granular urea: 400 g
Particle temperature during coating: 60°C
Dissolution temperature: $79 \pm 2$°C
Spray solution temperature: $79 \pm 2$°C
Hot air temperature: 70 to 80°C
Spray flow rate: 35.5 ml/min
Coating ratio: 8.4%

[Coating Ratio]

The coating ratio was calculated by the following Formula (5).

$$\text{Coating ratio (\%)} = \text{(Mass of coating)/(Mass of coated granular fertilizer)} \times 100 \qquad \text{Formula (5)}$$

Note that the mass of the coating material was calculated by subtracting the mass of the granular fertilizer before coating from the mass of the coated granular fertilizer. In addition, as each mass, an average value of 350 coated granular fertilizers or granular fertilizers before coating was used.

(Example 2)

A coated granular fertilizer was obtained in the same manner as in Example 1, except that 60 mass% of PBS-1 and 40 mass% of C Wax were added as coating materials to the dissolution tank 9.

(Example 3)

A coated granular fertilizer was obtained in the same manner as in Example 1, except that 80 mass% of PBS-1 and 20 mass% of RBW-1 were added as coating materials to the dissolution tank 9.

(Example 4)

A coated granular fertilizer was obtained in the same manner as in Example 1, except that 60 mass% of PBS-1 and 40 mass% of RBW-2 were added as coating materials to the dissolution tank 9.

(Example 5)

A coated granular fertilizer was obtained in the same manner as in Example 1, except that 90 mass% of PBS-1 and 10 mass% of RBW-1 were added as coating materials to the dissolution tank 9.

(Comparative Example 1)

A coated granular fertilizer was obtained in the same manner as in Example 1, except that 20 mass% of PBS-1 and 80 mass% of RBW-1 were added as coating materials to the dissolution tank 9.

(Comparative Example 2)

A coated granular fertilizer was obtained in the same manner as in Example 1, except that 60 mass% of PBS-1 and 40 mass% of PE(1000) were added as coating materials to the dissolution tank 9.

(Example 6)

A coated granular fertilizer was obtained in the same manner as in Example 1, except that 60 mass% of PBS-1 and 40 mass% of RBW-3 were added as coating materials to the dissolution tank 9.

(Example 7)

A coated granular fertilizer was obtained in the same manner as in Example 1, except that 60 mass% of PBS-1 and 40 mass% of RBW-4 were added as coating materials to the dissolution tank 9.

(Example 8)

A coated granular fertilizer was obtained in the same manner as in Example 1, except that 60 mass% of PBS-1 and 40 mass% of MoW-1 were added as coating materials to the dissolution tank 9.

(Example 9)

A coated granular fertilizer was obtained in the same manner as in Example 1, except that 60 mass% of PBS-1 and 40 mass% of MoW-2 were added as coating materials to the dissolution tank 9.

(Example 10)

A coated granular fertilizer was obtained in the same manner as in Example 1, except that 60 mass% of PBS-1 and 40 mass% of CanW-1 were added as coating materials to the dissolution tank 9.

(Example 11)

A coated granular fertilizer was obtained in the same manner as in Example 1, except that 60 mass% of PBS-1 and 40 mass% of CarW-1 were added as coating materials to the dissolution tank 9.

(Example 12)

A coated granular fertilizer was obtained in the same manner as in Example 1, except that 60 mass% of PBAT-1 and 40 mass% of RBW-1 were added as coating materials to the dissolution tank 9.

(Example 13)

A coated granular fertilizer was obtained in the same manner as in Example 1, except that 60 mass% of PLA-1 and 40 mass% of RBW-1 were added as coating materials to the dissolution tank 9.

(Example 14)

A coated granular fertilizer was obtained in the same manner as in Example 1, except that 60 mass% of PBS-1 and 40 mass% of MoW-3 were added as coating materials to the dissolution tank 9.

[Measurement of Release Rate]

For the coated granular fertilizers obtained in Examples and Comparative Examples, the release rate of the fertilizer components into water was measured.

10 g of the coated granular fertilizer of each of Examples and Comparative Examples and 200 ml of distilled water adjusted to 25°C in advance were added to 250 ml of a plastic container with a lid, and the container was allowed to stand in an incubator set at 25°C. After 7 days, all the water was removed from the container, and the amount of urea (urea release amount) contained in the removed water was determined by quantitative analysis (Dimethylaminobenzaldehyde Method "Detailed Fertilizer Analysis Method, Second Revised Edition", edited by Masayoshi KOSHINO, 1988, Yokendo Co. Ltd.) and was regarded as the amount of released urea.

Separately, the urea content contained in the coated granular fertilizer of the same lot was also measured in advance by the dimethylbenzaldehyde method. The release rate was calculated by the following Formula (6).

Release rate (%) = (Amount of released urea)/(Amount of urea contained in coated granular fertilizer) × 100    Formula (6)

The release rate on day 7 in water at 25°C is shown in Table 1.

[Evaluation]

The release controllability of the fertilizer components was evaluated according to the following criteria based on the measurement result of the release rate described above. In addition, the degree of biodegradation was evaluated based on the biodegradability of the component (B).

· Release controllability

O: The release rate is less than 80%, and the release controllability is excellent.
Δ: The release rate is less than 98% to 80% or more, and there is release controllability.
X: The release rate is 98% or more, and there is no release controllability.

· Biodegradability

O: It was confirmed to have the degree of biodegradation as measured in accordance with JIS or ISO standards.
X: It was not confirmed to have the degree of biodegradation as measured in accordance with JIS or ISO standards.

· Overall evaluation

OO= Both release controllability and biodegradability were evaluated as O.
O= Release controllability was evaluated as Δ, and biodegradability was evaluated as O.
X= Either release controllability or biodegradability was evaluated as X.

[Table 1]

Table 1

| | Coating film [mass%] | | | | | | | | | | | | | |
| | Biodegradable resin (A) | | | Wax (B) | | | | | | | | | | |
| | PBS-1 | PBAT-1 | PLA-1 | RBW-1 | RBW-2 | RBW-3 | RBW-4 | MoW-1 | MoW-2 | MoW-3 | CanW-1 | CarW-1 | C Wax | PE (1000) |
|---|---|---|---|---|---|---|---|---|---|---|---|---|---|---|
| Example 1 | 60 | 0 | 0 | 40 | 0 | 0 | 0 | 0 | 0 | 0 | 0 | 0 | 0 | 0 |
| Example 2 | 60 | 0 | 0 | 0 | 0 | 0 | 0 | 0 | 0 | 0 | 0 | 0 | 40 | 0 |
| Example 3 | 80 | 0 | 0 | 20 | 0 | 0 | 0 | 0 | 0 | 0 | 0 | 0 | 0 | 0 |
| Example 4 | 60 | 0 | 0 | 0 | 40 | 0 | 0 | 0 | 0 | 0 | 0 | 0 | 0 | 0 |
| Example 5 | 90 | 0 | 0 | 10 | 0 | 0 | 0 | 0 | 0 | 0 | 0 | 0 | 0 | 0 |
| Comparative Example 1 | 20 | 0 | 0 | 80 | 0 | 0 | 0 | 0 | 0 | 0 | 0 | 0 | 0 | 0 |
| Comparative Example 2 | 60 | 0 | 0 | 0 | 0 | 0 | 0 | 0 | 0 | 0 | 0 | 0 | 0 | 40 |
| Example 6 | 60 | 0 | 0 | 0 | 0 | 40 | 0 | 0 | 0 | 0 | 0 | 0 | 0 | 0 |
| Example 7 | 60 | 0 | 0 | 0 | 0 | 0 | 40 | 0 | 0 | 0 | 0 | 0 | 0 | 0 |
| Example 8 | 60 | 0 | 0 | 0 | 0 | 0 | 0 | 40 | 0 | 0 | 0 | 0 | 0 | 0 |
| Example 9 | 60 | 0 | 0 | 0 | 0 | 0 | 0 | 0 | 40 | 0 | 0 | 0 | 0 | 0 |
| Example 10 | 60 | 0 | 0 | 0 | 0 | 0 | 0 | 0 | 0 | 0 | 40 | 0 | 0 | 0 |
| Example 11 | 60 | 0 | 0 | 0 | 0 | 0 | 0 | 0 | 0 | 0 | 0 | 40 | 0 | 0 |
| Example 12 | 0 | 60 | 0 | 40 | 0 | 0 | 0 | 0 | 0 | 0 | 0 | 0 | 0 | 0 |
| Example 13 | 0 | 0 | 60 | 40 | 0 | 0 | 0 | 0 | 0 | 0 | 0 | 0 | 0 | 0 |
| Example 14 | 60 | 0 | 0 | 0 | 0 | 0 | 0 | 0 | 0 | 40 | 0 | 0 | 0 | 0 |

Table 1 (continued)

| | Release rate | Evaluation | | |
|---|---|---|---|---|
| | | Release controllability | Biodegradability | Total evaluation |
| Example 1 | 1.8 | O | O | OO |
| Example 2 | 6.1 | O | O | OO |
| Example 3 | 28.4 | O | O | OO |
| Example 4 | 96.0 | Δ | O | O |
| Example 5 | 84.1 | Δ | O | O |
| Comparative Example 1 | 100.0 | X | O | X |
| Comparative Example 2 | 0.2 | O | X | X |
| Example 6 | 20.0 | O | O | OO |
| Example 7 | 1.5 | O | O | OO |
| Example 8 | 15.5 | O | O | OO |
| Example 9 | 72.0 | O | O | OO |
| Example 10 | 9.2 | O | O | OO |
| Example 11 | 5.8 | O | O | OO |
| Example 12 | 88.2 | Δ | O | O |
| Example 13 | 81.0 | Δ | O | O |
| Example 14 | 96.5 | Δ | O | O |

[Discussion]

As shown in Table 1, according to Example 1, it can be seen that the combination of polybutylene succinate (PBS-1) and rice wax (RBW-1) exhibits excellent release controllability and biodegradability.

According to Example 2, it is found that even when the component (B) is changed to castor wax (C Wax), the release controllability and biodegradability are excellent.

According to Example 3, it is found that when the mass ratio (A/B) of the component (A) to the component (B) is 8/2, the release controllability and biodegradability are excellent.

When Example 1 is compared with Example 4, it is found that even when the component (B) is changed to rice wax (RBW-2) having a high acid value, both release controllability and biodegradability can be ensured; however, rice wax (RBW-1) having a low acid value tends to exhibit excellent release controllability.

When Example 3 is compared with Example 5, it is found that, when the content of rice wax (RBW-1) is 10 mass%, both release controllability and biodegradability can be ensured, but a higher mass content of rice wax in the coating tends to provide excellent release controllability.

According to Comparative Example 1, it can be seen that when the mass ratio of rice wax (RBW-1) exceeds 80 mass%, release controllability cannot be ensured.

According to Comparative Example 2, it is found that the use of polyethylene wax (PE(1000)) instead of the component (B) significantly impairs biodegradability.

**Claims**

1. A coated granular fertilizer comprising: a granular fertilizer; and a coating that covers a surface of the granular fertilizer,

   wherein the coating contains a biodegradable resin (A) and at least one wax (B) selected from the group consisting of a natural wax (b1) having an ester group and a modified product thereof (b2), and
   the wax (B) is contained in an amount of less than 80 mass% in 100 mass% of the coating.

2. The coated granular fertilizer according to claim 1, wherein the wax (B) is at least one selected from the group consisting of rice wax, castor wax, montan wax, beeswax, carnauba wax, candelilla wax, palm wax, soybean oil wax, and sunflower oil wax.

3. The coated granular fertilizer according to claim 1 or 2, wherein the wax (B) satisfies the following requirement (I) :

(I) an acid value is 0.5 to 130 in a method for measuring the acid value as defined in JIS K 0070.

4. The coated granular fertilizer according to claim 1, wherein the biodegradable resin (A) is at least one selected from the group consisting of polybutylene succinate, polylactic acid, polybutylene adipate terephthalate, polyhydroxyalkanoate, cellulose acetate, and polycaprolactone.

5. The coated granular fertilizer according to claim 1, wherein the biodegradable resin (A) satisfies the following requirement (II):
(II) a melt flow rate (MFR) measured in accordance with ISO 1133 at 190°C under a load of 2.16 kg is in a range of 0.1 to 30 g/10 min.

6. The coated granular fertilizer according to claim 1 or 2, wherein a mass ratio (A/B) of the biodegradable resin (A) to the wax (B) in 100 mass% of the coating is 8/2 to 5/5.

7. The coated granular fertilizer according to claim 1 or 2, wherein a ratio of the coating with respect to 100 mass% of the coated granular fertilizer is 3 to 20 mass%.

[Fig. 1]

## INTERNATIONAL SEARCH REPORT

| International application No. |
|---|
| **PCT/JP2024/016199** |

**A.    CLASSIFICATION OF SUBJECT MATTER**

*C05G 5/30*(2020.01)i; *B01J 2/00*(2006.01)i; *C05G 5/10*(2020.01)i
FI:    C05G5/30 ZBP; C05G5/10; B01J2/00 B; B01J2/00 C

According to International Patent Classification (IPC) or to both national classification and IPC

**B.    FIELDS SEARCHED**

Minimum documentation searched (classification system followed by classification symbols)

C05G5/30; B01J2/00; C05G5/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)JSTPlus/JMEDPlus/JST7580 (JDreamIII)

**C.    DOCUMENTS CONSIDERED TO BE RELEVANT**

| Category* | Citation of document, with indication, where appropriate, of the relevant passages | Relevant to claim No. |
|---|---|---|
| A | JP 2019-084522 A (JCAM AGRI CO., LTD.) 06 June 2019 (2019-06-06)<br>claims, paragraphs [0034], [0059]-[0079] | 1-7 |
| A | JP 2003-192482 A (UBE INDUSTRIES, LTD.) 09 July 2003 (2003-07-09)<br>claims, paragraphs [0050]-[0086] | 1-7 |
| A | JP 2002-145691 A (UBE INDUSTRIES, LTD.) 22 May 2002 (2002-05-22)<br>claims, paragraphs [0046]-[0123] | 1-7 |
| A | JP 2000-143379 A (DAICEL CHEM. IND. LTD.) 23 May 2000 (2000-05-23)<br>claims, paragraphs [0018]-[0032] | 1-7 |
| A | EL, Mouat, A. et al. Exploiting poly(ε-caprolactone) grafted from hydrohydroxymethylated sunflower oil as biodegradable coating material of water-soluble fertilizers, Progress in Organic Coatings, (2023), vol. 179, pp. Null , doi: 10.1016/j.porgcoat.2023.107513<br>abstract | 1-7 |

☑ Further documents are listed in the continuation of Box C.       ☑ See patent family annex.

| | | |
|---|---|---|
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T"    later document published after the international filing date or priority date and not in conflict with the application but cited to understand the principle or theory underlying the invention

"X"    document of particular relevance; the claimed invention cannot be considered novel or cannot be considered to involve an inventive step when the document is taken alone

"Y"    document of particular relevance; the claimed invention cannot be considered to involve an inventive step when the document is combined with one or more other such documents, such combination being obvious to a person skilled in the art

"&"    document member of the same patent family

| Date of the actual completion of the international search | Date of mailing of the international search report |
|---|---|
| **20 June 2024** | **02 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

International application No.

**PCT/JP2024/016199**

| C. | DOCUMENTS CONSIDERED TO BE RELEVANT | |
|---|---|---|
| Category* | Citation of document, with indication, where appropriate, of the relevant passages | Relevant to claim No. |
| A | JP 2023-009027 A (JCAM AGRI CO., LTD.) 19 January 2023 (2023-01-19)<br>claims, paragraphs [0045]-[0063] | 1-7 |

Form PCT/ISA/210 (second sheet) (July 2022)

| INTERNATIONAL SEARCH REPORT<br>Information on patent family members | | | International application No.<br>**PCT/JP2024/016199** |
|---|---|---|---|

| Patent document<br>cited in search report | Publication date<br>(day/month/year) | Patent family member(s) | Publication date<br>(day/month/year) |
|---|---|---|---|
| JP 2019-084522 A | 06 June 2019 | (Family: none) | |
| JP 2003-192482 A | 09 July 2003 | (Family: none) | |
| JP 2002-145691 A | 22 May 2002 | (Family: none) | |
| JP 2000-143379 A | 23 May 2000 | US 2002/0094444 A1<br>claims, paragraphs [0753]-[1147]<br>WO 1999/063001 A1<br>EP 1008629 A1 | |
| JP 2023-009027 A | 19 January 2023 | (Family: none) | |

**REFERENCES CITED IN THE DESCRIPTION**

**Patent documents cited in the description**

- JP H9263476 A
- JP 2017517471 A
- US 20210387925 A
- JP H07315976 A
- JP 2023075207 A